# EUROPEAN PATENT SPECIFICATION

(11) **EP 3 992 622 B1**
(45) Date of publication and mention of the grant of the patent: **28.06.2023**
(21) Application number: 20465580.7
(22) Date of filing: 03.11.2020
(51) Int. Cl.: G01N 27/12

(54) **QUATERNARY HYDROPHILIC NANOHYBRID COMPOSITION FOR RESISTIVE HUMIDITY SENSORS**
QUATERNÄRE HYDROPHILE NANOHYBRIDZUSAMMENSETZUNG FÜR RESISTIVE FEUCHTIGKEITSSENSOREN
COMPOSITION NANOHYBRIDE HYDROPHILE QUATERNAIRE POUR CAPTEURS D'HUMIDITÉ RÉSISTIFS

(43) Date of publication of application: 04.05.2022
(73) Proprietor: Institutul National de Cercetare-Dezvoltare Pentru Microtehnologie - IMT Bucuresti INCD, Jud. Ilfov (RO)
(72) Inventor: SERBAN, Bogdan-Catalin, Bucuresti (RO); BUIU, Octavian, 060969 Bucuresti (RO); COBIANU, Cornel, 051434 Bucuresti (RO); AVRAMESCU, Viorel Marian, Bucuresti (RO); DUMBRAVESCU, Niculae, Bucuresti (RO)
(74) Representative: Enescu, Miruna

(56) References cited:
- CN-A- 109 613 071
- RO-A2- 133 637
- RO-A2- 134 097
- RO-A2- 134 263
- RO-A2- 134 521
- US-A1- 2020 003 716

## Description

### FIELD OF THE INVENTION

The present invention relates to a humidity sensor for detecting relative humidity as a change in electric resistance.

### PRIOR ART OF THE INVENTION

Relative humidity (RH) sensors have gained increasing interest and are of great importance in a wide variety of commercial and industrial applications, including those associated with: building ventilation control, food/beverage processing, electronics (clean rooms and wafer processing), medical field (respirators, incubators, sterilizers), diagnosis of corrosion and erosion in infrastructures cement production, agriculture (cereals storage), pharmaceuticals (synthesis and quality control of drugs), chemical industry (dryers, high-temperature catalyst control system and furnaces), industrial drying, meteorology, etc. [1 - 5]

Among the types of sensors used in the control and monitoring of humidity, resistive sensors may be an attractive alternative due to their simplicity in construction, excellent sensitivity and low price [6].

As a consequence, in recent decades, various types of resistive humidity sensors have been designed and developed, using different materials as sensitive layers.

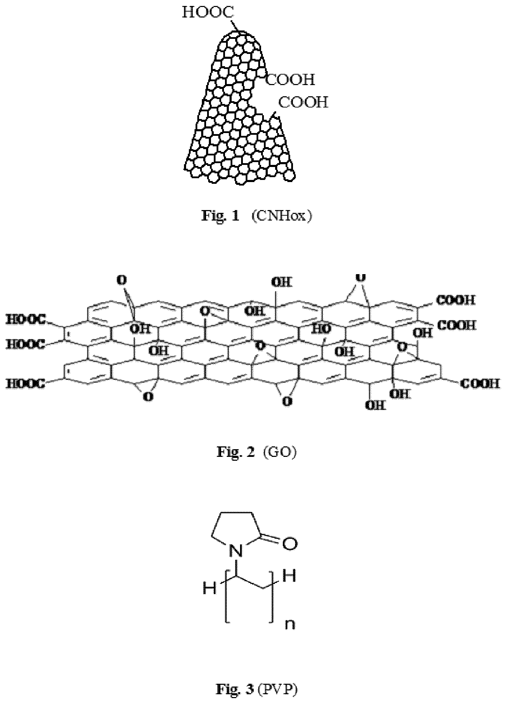

Oxidized carbon nanohorns **(****Fig. 1****)** [7-10] and graphene oxide (**Fig. 2**) [ 11-15] are two types of nanocarbonic materials which were intensively used as key sensing elements in the design of resistive humidity sensors. Application patent RO134261A2 entitled "*Senzor chemirezistiv de umiditate pe baza de matrice nanocompozite continand nanohornuri carbonice hidrofile*" (Bogdan-C 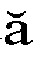 t 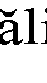 lin 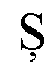 erban, Octavian Buiu, Cornel Cobianu, Viorel Avramescu, Ionela Cristina Pachiu, Octavian Narcis Ionescu, Maria Roxana Marinescu) discloses a chemiresistive humidity sensor which uses oxidized carbon nanohorns/hydrophilic polymer. Among the selected polymers are carboxymethylcellulose sodium salt and agarose. The proposed sensor consists of a dielectric substrate such as Lexan, electrodes (aluminium, copper, chromium, etc.) and the humidity sensing layer, deposited by spin coating or drop-casting methods.

The synthesis of oxidized carbon nanohorns is performed by two different methods, using the oxygen plasma treatment, respectively the water plasma treatment. Both types of hydrophilization allow the functionalization of pristine carbon nanohorns by grafting carboxyl, hydroxyl, carbonyl and epoxy groups. The optimal degree of hydrophilization of the carbonaceous nanomaterial, needed to obtain an increased sensitivity, can be modulated by changing the plasma power as well as the exposure time.

Application patent US20170176370A1 entitled "*Graphene oxide sensors*" (Luis Fernando Velasquez-Garcia, Anthony Park Taylor) discloses a resistive humidity sensor structure which uses graphene oxide as a sensing element. The sensor exhibits suitable characteristics such as an appropriate value of resistance, a high degree of sensitivity. Response time of the sensor to a step-change in the ambient relative humidity from 10% relative humidity to 50% relative humidity, maybe less than or equal to 1 minute.

Application patent CN102323300A entitled "*Polyelectrolyte and graphene composite resistive moisture sensor and manufacturing method thereof*" discloses a resistive humidity sensor structure which uses polyelectrolyte (polydiallyldimethylammonium chloride) and graphene composite as sensing element. The humidity sensor has the advantages of moderate impedance value, good linearity high sensitivity and can be used at room temperature in a wide humidity range.

Metal oxide semiconductors are also used as sensitive layers in the design of the resistive humidity sensors [16 - 20].

Application patent KR20020023937A entitled "*Humidity sensor using nano-sized and porous TiO₂-SnO₂ thin films*" discloses a resistive humidity sensor structure with a semiconductor film of titanium oxide (TiO₂) and titanium oxide-tin oxide (TiO₂ - SnO₂) as key sensing elements. Titanium oxide and titanium oxide-tin oxide semiconductor films have a porous structure. The oxide semiconductor film has a thickness of 480-580 nm, and the oxide semiconductor particles have a size of 10.8-13.1 nm.

The technical problem solved by the present invention consists of designing new sensitive layers sensible to the variation of the relative humidity value, to be used in the manufacturing of resistive humidity sensors capable of detection at room temperature, exhibiting fast response time, low cost, small size, and simplicity in manufacturing.

In a first aspect, the present invention discloses quaternary nanohybrid compositions (quaternary nanocomposites), suitable for forming sensitive layers for sensing the variation of the relative humidity value, comprising or consisting of: oxidized carbon nanohorns (CNHox), graphene oxide (GO), tin (IV) oxide (SnO₂) and polyvinylpyrrolidone (PVP), wherein said compositions comprise 20% to 25% by weight CNHox, 20% to 25% by weight GO, 25% to 28,5% by weight SnO₂ and 25% to 28,5% by weight PVP. In preferred embodiments, the weight ratios of CNH_{OX}/GO/SnO₂/PVP in the sensitive layerare 1/1/1/1 or 0.75/0.75/1/1w/w ratio.

From the detection principle point of view, the resistance of the conductive layer varies with the relative humidity level.

The quaternary hydrophilic nanohybrid compositions of the invention, as sensitive layers for monitoring relative humidity have several significant advantages:
- both oxidized carbon nanohorns (CNHox) and graphene oxide (GO) are nanocarbonic materials which provide a high specific surface area (SSA)/volume ratio, affinity for water molecules as well as a rapid variation of the electrical resistance in contact with water molecules in the humidity range from 0°7oRH to 90%RH. Further to our experiments, we have found that not only has the use of both CNHox and GO, preferably at a 1/1 w/w ratio, result in a synergic increase of the sensitivity and reactivity to humidity variation, but also in an increased chemical and mechanical stability of the resulting sensitive layer.
- nanometric tin (IV) oxide (SnO₂) powder exhibits good sensitivity towards the relative humidity. Moreover, the presence of SnO₂ has the advantage that it decreases the π-π stacking interaction between the graphene oxide and the oxidized carbon nanohorns, which would otherwise significantly decrease the specific surface area of the sensitive layer.

The oxidized carbon nanohorns and the graphene oxide have p-type electrical conduction (through holes), while SnO₂ is a n-type metallic oxide semiconductor (through electrons). By adding SnO₂ to the combination of CNHox and GO, it will result in the formation, in the quaternary nanocomposite, of islands of p-n semiconductor heterojunctions embedded in the PVP (a dielectric material), with the effect of decreasing the π-π stacking interaction between GO and the nanohorns. Since the mass percent of oxidized carbon nanohorns and graphene oxide is very high (about 50%), the electric conduction in the sensitive layer is practically only p-type, while the SnO₂ influences the conduction via its water affinity and by increasing the specific surface area of the quaternary nanocomposite.
- polyvinylpyrrolidone is a hydrophilic polymer with excellent binder properties for the nanocomposition of the present invention
- detection at room temperature;
- fast response time;
- low cost, small size, and simplicity in manufacturing.

In another aspect of the invention, there is disclosed a process for manufacturing said quaternary nanohybrid compositions, the process comprising the following steps:
a) preparing a polyvinylpyrrolidone (PVP) solution by dissolving a PVP polymer in isopropyl alcohol under magnetic stirring for about 30 minutes at room temperature,
b) dispersing the oxidized carbon nanohorns in the previously prepared PVP solution and continuing stirring for about 2 hours at room temperature,
c) dispersing an aqueous dispersion of graphene oxide in water (GO in water w/v- 1 mg/mL) in the dispersion prepared in step (b) and stirring for about 2 hours at room temperature,
d) dispersing a nanometric powder of tin (IV) oxide in the dispersion prepared in step (c) and continuing stirring for about 30 minutes at room temperature.

The solvents used in the above manufacturing process (isopropyl alcohol, water) evaporate during the process of depositing said quaternary nanohybrid composition as a sensitive layer, thus the quaternary nanohybrid composition in the final sensitive layer will consist of the composition mentioned above (20% to 25% by weight CNHox, 20% to 25% by weight GO, 25% to 28,5% by weight SnO₂ and 25% to 28,5% by weight PVP).

In another aspect of the present invention, it is disclosed a resistive humidity sensor comprising: a dielectric substrate, a first electrode and a second electrode deposited on said dielectric substrate and a sensitive layer made of the quaternary nanohybrid composition of the invention as described above disposed on said first electrode and second electrode.

In a preferred embodiment, said dielectric substrate consists of a Si wafer covered by a SiO₂ layer. The dielectric substrate may have a thickness from 450 microns to 600 microns. The electrodes may be made from the same material or may be formed of different materials. The electrodes may be made from conductive materials such as aluminium and copper.

In yet another aspect of the present invention, there is disclosed a process for manufacturing said resistive humidity sensors, comprising the steps:
a) depositing a first electrode and a second electrode onto the surface of a dielectric substrate;
b) depositing the quaternary nanohybrid composition of the invention to form a layer on at least part of the surface of said first electrode and second electrode;
c) subjecting the layer of step b) to heat treatment at about 70°C, for about two hours, under vacuum.

In step a) of the above process for manufacturing the resistive humidity sensors of the invention, the electrodes may be deposited onto the surface of the dielectric substrate by using different methods such as sputtering, direct printing, evaporation, etc. Also, the electrodes may be deposited onto the dielectric substrate in a linear pattern or an interdigitated pattern.

In step b) of the above process for manufacturing the resistive humidity sensors of the invention, the quaternary nanohybrid composition sensitive layer of the invention may be deposited on at least part of the outer-facing surface of said first and second electrodes through electrospinning, drop-casting or spin coating methods, after previously masking the contact area.

In step c) of the above process for manufacturing the resistive humidity sensors of the invention, the solvents used in the process for manufacturing the quaternary nanohybrid composition (isopropyl alcohol, water) evaporate, thus the quaternary nanohybrid composition in the sensitive layer resulting after step c) will consist of the composition of the invention as mentioned above (20% to 25% by weight CNHox, 20% to 25% by weight GO, 25% to 28,5% by weight SnO₂ and 25% to 28,5% by weight PVP)

### Examples

There are further presented a series of examples of the invention, in connection also with the figures, which represent:
**Fig. 1** shows a structure of oxidized carbon nanohorns (CNHox);
**Fig. 2** shows a structure of graphene oxide (GO);
**Fig. 3** shows the structure of polyvinylpyrrolidone (PVP);
**Fig. 4** shows a resistive humidity sensor with linear electrodes according to one embodiment of the present invention;
**Fig. 5** shows a resistive humidity sensor with interdigitated electrodes according to another embodiment of the present invention;
**Fig. 6** shows a SEM image for a CNH_{OX}/GO/SnO₂/PVP=0.75/0.75/1/1 nanohybrid composition;
**Fig. 7** shows a SEM image for a CNH_{OX}/GO/SnO₂/PVP=1/1/1/1 nanohybrid composition;
**Fig. 8** shows a schematic representation of a testing chamber used for performing the sensing measurements for the sensors of the invention;
**Fig. 9** shows the output of the sensor CNH_{OX}/GO/SnO₂/PVP=0.75/0.75/1/1 (R curve), in time, and of a commercially available industrial sensor (RH curve),
**Fig. 10** shows the output of the sensor CNH_{OX}/GO/SnO₂/PVP=1/1/1/1 (R curve), in time, and of a commercially available industrial sensor (RH curve).

### Example 1

A resistive humidity sensor according to one embodiment of the present invention has been manufactured as follows:
1) a polyvinylpyrrolidone (PVP) solution was prepared by dissolving 1 mg of PVP polymer in 5 mL of isopropyl alcohol and subjecting to magnetic stirring for 30 minutes at room temperature;
2) 0.75 mg oxidized carbon nanohorns were dispersed in the previously prepared solution and stirring was continued for 2 hours at room temperature;
3) 0.75 mL aqueous dispersion of graphene oxide in water (GO in water w/v- 1 mg/mL) were dispersed in the dispersion prepared in step (2) and stirring was continued for 2 hours at room temperature;
4) 1 mg nanometric powder of tin (IV) oxide were dispersed in the dispersion prepared in step (3) and stirring was continued for 30 minutes at room temperature;
5) the resulted dispersion was deposited by the "drop-casting" method on a Si/SiO₂ IDT sensing structure (after previously masking the contact area);
6) the sensing layer of CNHox/ GO/SnO₂/PVP nanohybrid was subjected to heat treatment at 70° C, for two hours, under vacuum.

The sensitive layer thus prepared and deposited comprises the CNH_{OX}/GO/SnO₂/PVP nanohybrid composition of the inventions at 0.75/0.75/1/1 (w/w ratio).

### Example 2

A resistive humidity sensor according to another embodiment of the present invention has been manufactured as follows:
1) The polyvinylpyrrolidone (PVP) solution was prepared by dissolving 1 mg of polymer in 5 mL of isopropyl alcohol and subjecting to magnetic stirring for 30 minutes at room temperature;
2) 1 mg oxidized carbon nanohorns were dispersed in the previously prepared solution and stirring was continued for 3 hours at room temperature;
3) 1 mL aqueous dispersion of graphene oxide in water (GO in water w/v- 1 mg/mL) were dispersed in the dispersion prepared in step (2) and stirring was continued for 3 hours at room temperature.
4) 1 mg nanometric powder of tin (IV) oxide were dispersed in the dispersion prepared in step (3) and stirring was continued for 1 hour at room temperature;
5) the resulted dispersion was deposited by the "drop-casting" method on a Si/SiO₂ IDT sensing structure (after previously masking the contact area);
6) the sensitive layer of CNH_{OX}/GO/SnO₂/PVP nanohybrid was subjected to heat treatment at 70° C, for two hours, under vacuum.

The sensitive layer thus prepared and deposited comprises the CNH_{OX}/GO/SnO₂/PVP nanohybrid composition of the invention at 1/1/1/1 (w/w ratio).

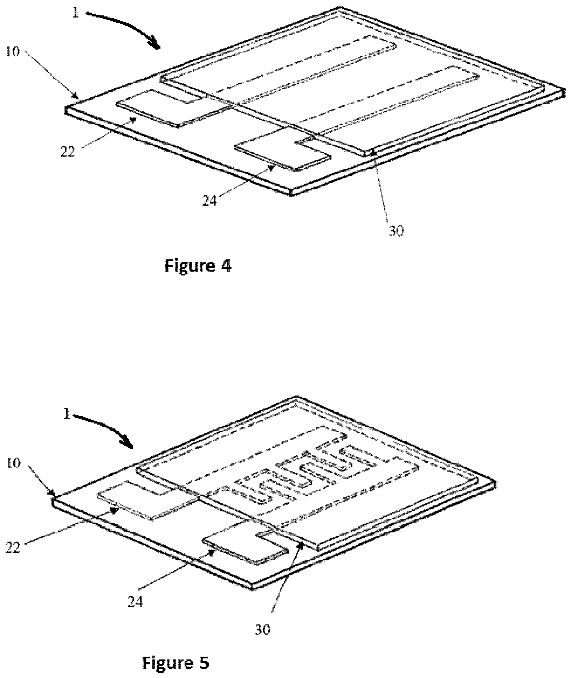

**Figure 4** shows a resistive humidity sensor (1) according to one embodiment of the present invention. In this embodiment, said sensor (1) comprises a dielectric substrate (10) made of a Si wafer covered by a SiO₂ layer, a first electrode (22) and a second electrode (24) that are placed in a linear pattern, and a sensitive layer (30) made of a quaternary nanohybrid composition of the present invention.

**Figure 5** shows a resistive humidity sensor (1) according to another embodiment of the present invention. In this embodiment, said sensor (1) comprises a dielectric substrate (10) made of a Si wafer covered by a SiO₂ layer, a first electrode (22) and a second electrode (24) that are placed in an interdigitated pattern, and a sensitive layer (30) made of a quaternary nanohybrid composition of the present invention.

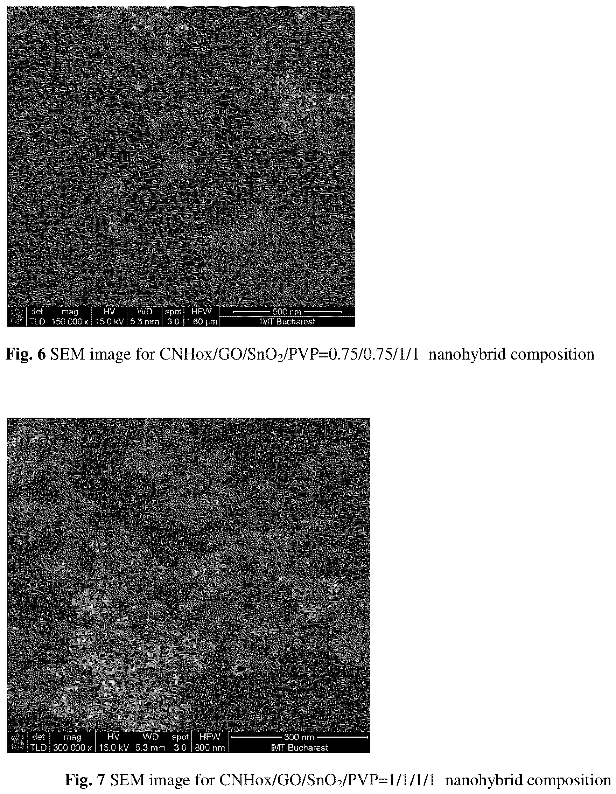

The properties of the sensitive layers manufactured according to Example 1 and Example 2 were investigated by using SEM (Scanning Electron Microscope) technique. **Figure 5** shows the SEM image obtained for a CNH_{OX}/GO/SnO₂/PVP=0.75/0.75/1/1 nanohybrid composition manufactured according to Example 1, and **Figure 6** shows a SEM image obtained for a CNH_{OX}/GO/SnO₂/PVP=1/1/1/1 nanohybrid composition prepared according to Example 2.

The relative humidity monitoring capability of the sensitive layers was investigated by applying a current between the two electrodes and measuring the voltage at different values of the relative humidity level at which the sensitive layer made of the quaternary nanohybrid composition of the invention was exposed. Measurements were performed in humid nitrogen at room temperature, for different relative humidity values, and compared with the response of a commercial, industrial grade, capacitive RH humidity sensor, provided with signal-processing and signal-amplifying electronics.

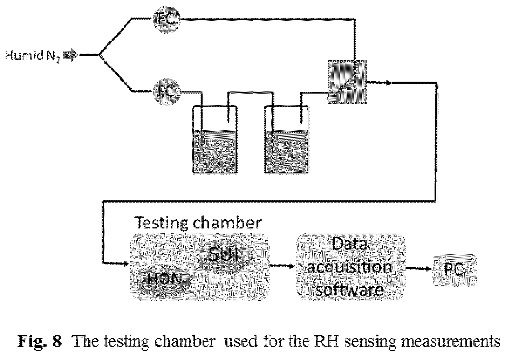

The testing chamber used for the RH sensing measurements accommodated two sensors: the sensor with a sensitive layer of the present invention (depicted as SUI - Sensor Under Investigation - as shown in **Figure 8**), and said commercially available industrial RH sensor (labelled "HON") provided with signal-processing and signal-amplifying electronics. The latter was used for double-checking the RH value indicated by the flow controller (FC) - system. All the chemicals used in the present invention were purchased from Sigma Aldrich.

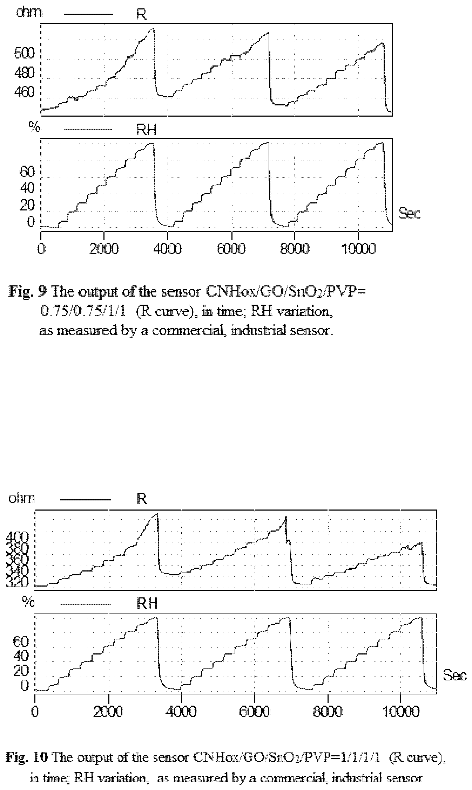

**Figure 9** shows a comparison between the response of said commercially available RH sensor (curve labelled "RH") and the IDT RH sensor made according to the above Example 1, employing CNH_{OX}/GO/SnO₂/PVP nanohybrid at 0.75/0.75/1/1.w/w ratio as sensitive layer (curve labelled "R") when varying RH from 0% to 90%. Both sensors were placed in a test-chamber to monitor variations of humidity over time, from the initial moment until 10000+ sec. Said commercially available RH sensor measured the variation of relative humidity over time, expressed in %. The sensor of Example 1 has registered the variation of the electrical resistance of the sensitive layer, proportionally with the variation of the relative humidity. The R-curve in **Figure 9** represents said variation of the electrical resistance, measured in ohm.
The relative humidity monitoring capability of the sensor of Example 1 was investigated by:
a. applying a constant voltage bias between the two electrodes (22, 24);
b. measuring the current intensity through the sensitive layer (30);
c. calculating the electrical resistance of the sensitive layer (30).
These steps were followed for each RH point which was measured. The comparative graphic of **Figure 9** shows that the sensor of Example 1 followed very well the humidity variation curve over time and rendered results comparable to the reference commercial sensor, even though the sensor of the invention (Example 1) is not provided with signal-processing and -amplifying electronics, and its manufacturing technology is much more simple and significantly less expensive.

**Figure 10** shows a comparison between the response of said commercially available RH sensor (curve labelled "RH") and the IDT RH sensor made according to the above Example 2, employing CNH_{OX}/GO/SnO₂/PVP nanohybrid at 1/1/1/1.w/w ratio as sensitive layer (curve labelled "R"), when varying RH from 0% to 90%. Both sensors were placed in a test-chamber to monitor variations of humidity over time, from the initial moment until 10000+ sec. Said commercially available RH sensor measured the variation of relative humidity over time, expressed in %. The sensor of Example 2 has registered the variation of the electrical resistance of the sensitive layer, proportionally with the variation of the relative humidity. The R-curve in **Figure 10** represents said variation of the electrical resistance, measured in ohm.
The relative humidity monitoring capability of the sensor of Example 2 was also investigated by:
a. applying a constant voltage bias between the two electrodes (22, 24);
b. measuring the current intensity through the sensitive layer (30);
c. calculating the electrical resistance of the sensitive layer (30).
These steps were followed for each RH point which was measured. The comparative graphic of **Figure 10** shows that the sensor of Example 2 followed very well the humidity variation curve over time and rendered results comparable to the reference commercial sensor, even though the sensor of the invention (Example 2) is not provided with signal-processing and -amplifying electronics, and its manufacturing technology is much more simple and significantly less expensive.

### References

**1.** Lee, C. Y., Lee, G. B. (2005). Humidity sensors: a review. Sensor Letters, 3 (1-2), 1-15*.*
**2.** Sikarwar, S., Yadav, B. C. (2015). Opto-electronic humidity sensor: A review. Sensors and Actuators A: Physical, 233, 54-70*.*
**3.** Farahani, H., Wagiran, R., Hamidon, M. N. (2014). Humidity sensors principle, mechanism, and fabrication technologies: a comprehensive review. Sensors, 14(5), 7881-7939*.*
**4.** Cobianu, C., Serban, B., Mihaila, M. N. (2013). U.S. Patent No. 8,479,560*.* Washington, DC: U.S. Patent and Trademark Office.
**5.** Cobianu, C., Serban, B., Bostan, C., Costea, S., Buiu, O., Stratulat, A., Brezeanu, M. (2016). U.S. Patent Application No. 14/991,096*.*
**6.** Smulko, J. M., Trawka, M., Granqvist, C. G., Ionescu, R., Annanouch, F., Llobet, E., Kish, L. B. (2015). New approaches for improving selectivity and sensitivity of resistive gas sensors: a review. Sensor Review, Vol. 35 (4), 340-347*.*
**7.** Serban, B. C., Buiu, O., Dumbravescu, N., Cobianu, C., Avramescu, V., Brezeanu, M., Nicolescu, C. M. (2020). Oxidized Carbon Nanohorn-Hydrophilic Polymer Nanocomposite as the Resistive Sensing Layer for Relative Humidity. Analytical Letters, 1-14*.*
**8.** Serban, B. C., Buiu, O., Dumbravescu, N., Cobianu, C., Avramescu, V., Brezeanu, M., Nicolescu, C. M. (2020). Oxidized Carbon Nanohorns as Novel Sensing Layer for Resistive Humidity Sensor. Acta Chimica Slovenica, 67, 1-7*.*
**9.** Serban, B. C., Buiu, O., Cobianu, C., Avramescu, V., Dumbr 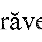 vescu, N., Brezeanu, M., Marinescu, R. (2019). Ternary Carbon-Based Nanocomposite as Sensing Layer for Resistive Humidity Sensor. *Multidisciplinary Digital Publishing Institute Proceedings, 29(1), 114.*
**10.** Marinescu R., 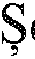 erban, B. C., Dumbravescu, N., Avramescu V., Cobianu C., Buiu O., (2019). CARBON-BASED MATERIALS FOR HEALTHCARE MICRO-DEVICES. *Revista de Tehnologii Neconventionale, 23(4), 72-77.*
**11.** Li, X., Chen, X., Chen, X., Ding, X., Zhao, X. (2018). High-sensitive humidity sensor based on graphene oxide with evenly dispersed multiwalled carbon nanotubes. Materials Chemistry and Physics, 207, 135-140*.*
**12.** Yu, H. W., Kim, H. K., Kim, T., Bae, K. M., Seo, S. M., Kim, J. M., Kim, Y. H. (2014). Self-powered humidity sensor based on graphene oxide composite film intercalated by poly (sodium 4-styrenesulfonate). ACS Applied Materials & Interfaces, 6 (11), 8320-8326*.*
**13.** Borini, S., White, R., Wei, D., Astley, M., Haque, S., Spigone, E., Ryhanen, T. (2013). Ultrafast graphene oxide humidity sensors. ACS Nano, 7(12), 11166-11173*.*
**14.** Zhang, D., Wang, D., Li, P., Zhou, X., Zong, X., Dong, G. (2018). Facile fabrication of high-performance QCM humidity sensor based on layer-by-layer self-assembled polyaniline/graphene oxide nanocomposite film. Sensors and Actuators B: Chemical, 255, 1869-1877*.*
**15.** Yao, Y., Chen, X., Guo, H., Wu, Z., Li, X. (2012). Humidity sensing behaviours of graphene oxide-silicon bi-layer flexible structure. Sensors and Actuators B: Chemical, 161(1), 1053-1058*.*
**16.** Zhong, Y., Li, W., Zhao, X., Jiang, X., Lin, S., Zhen, Z., Zhu, H. (2019). High-response room-temperature NO2 sensor and ultrafast humidity sensor based on SnO2 with rich oxygen vacancy. ACS Applied Materials & Interfaces, 11(14), 13441-13449*.*
**17.** Zhu, Y., Chen, J., Li, H., Zhu, Y., Xu, J. (2014). Synthesis of mesoporous SnO2-SiO2 composites and their application as quartz crystal microbalance humidity sensor. Sensors and Actuators B: Chemical, 193, 320-325*.*
**18.** Sin, N. M., Mamat, M. H., Malek, M. F., Rusop, M. (2014). Fabrication of nanocubic ZnO/SnO2 film-based humidity sensor with high sensitivity by ultrasonic-assisted solution growth method at different Zn: Sn precursor ratios. Applied Nanoscience, 4(7), 829-838*.*
**19.** Ismail, A. S., Mamat, M. H., Yusoff, M. M., Malek, M. F., Zoolfakar, A. S., Rani, R. A., Rusop, M. (2018). Enhanced humidity sensing performance using Sn-Doped ZnO nanorod Array/SnO2 nanowire heteronetwork fabricated via two-step solution immersion. Materials Letters, 210, 258-262.
**20.** Parthibavarman, M., Hariharan, V., Sekar, C. J. M. S. (2011). High-sensitivity humidity sensor based on SnO2 nanoparticles synthesized by microwave irradiation method. Materials Science and Engineering: C, 31(5), 840-844.

## Claims

1. A quaternary nanohybrid composition suitable for forming humidity sensitive layers (30) for sensing the variation of the relative humidity value, comprising or consisting of: 20% to 25% by weight oxidized carbon nanohorns (CNHox), 20% to 25% by weight graphene oxide (GO), 25% to 28,5% by weight tin (IV) oxide (SnO₂) and 25% to 28,5% by weight polyvinylpyrrolidone (PVP).

2. A quaternary nanohybrid composition according to claim 1, wherein, the weight ratios of CNH_{OX}/GO/SnO₂/PVP in said quaternary nanohybrid composition are 1/1/1/1 or 0.75/0.75/1/1w/w ratio.

3. A process for manufacturing a quaternary nanohybrid composition according to claim 1 or 2, the process comprising the following steps:
a) preparing a polyvinylpyrrolidone (PVP) solution by dissolving a PVP polymer in isopropyl alcohol under magnetic stirring for about 30 minutes at room temperature,
b) dispersing the oxidized carbon nanohorns in the previously prepared PVP solution and continuing stirring for about 2 hours at room temperature,
c) dispersing an aqueous dispersion of graphene oxide in water (GO in water w/v- 1 mg/mL) in the dispersion prepared in step (b) and stirring for about 2 hours at room temperature,
d) dispersing a nanometric powder of tin (IV) oxide in the dispersion prepared in step (c) and continuing stirring for about 30 minutes at room temperature.

4. A humidity sensitive layer (30) for sensing the variation of the relative humidity value, comprising or consisting of the quaternary nanohybrid composition of claim 1 or 2.

5. A resistive humidity sensor (1) comprising: a dielectric substrate (10), a first electrode (22) and a second electrode (24) deposited on said dielectric substrate (10), and a humidity sensitive layer (30) made of the quaternary nanohybrid composition according to claim 1 or 2 disposed on at least a part of said first electrode (22) and second electrode (24).

6. A resistive humidity sensor (1) according to claim 5, wherein said dielectric substrate (10) is manufactured from Si substrate covered by a SiO₂ layer.

7. A resistive humidity sensor (1) according to any of claims 5 to 6, wherein said dielectric substrate (10) has a thickness from 450 microns to 600 microns.

8. A resistive humidity sensor (1) according to any of claims 5 to 7, wherein said first (22) and second (24) electrodes are made from the same conductive material or different conductive materials, such as aluminium or copper.

9. A resistive humidity sensor (1) according to any of claims 5 to 8, wherein said first (22) and second (24) electrodes are deposited onto a surface of the dielectric substrate (10) by at least one of sputtering, direct printing or evaporation.

10. A resistive humidity sensor (1) according to any of claims 5 to 9, wherein said first (22) and second (24) electrodes are deposited onto the surface of the dielectric substrate (10) in a linear pattern or in an interdigitated pattern.

11. Process for manufacturing a resistive humidity sensor (1) of any of claim 5 to 10, comprising the steps:
a) depositing a first electrode (22) and a second electrode (24) onto a surface of a dielectric substrate (10) in a linear pattern or an interdigitated pattern;
b) depositing the quaternary nanohybrid composition of any of claims 1 to 2 to form a layer on at least part of the surface of said first electrode (22) and second electrode (24);
c) subjecting the layer of step b) to heat treatment at about 70° C, for about two hours, under vacuum.

12. Process for manufacturing a resistive humidity sensor (1) according to claim 11, wherein step b) is performed by electrospinning, drop-casting or spin coating.

## Patentansprüche

1. Eine quaternäre Nanohybrid-Zusammensetzung, die zum Bilden von feuchtigkeitsempfindlichen Schichten (30) zum Erfassen der Veränderung des relativen Feuchtigkeitswerts geeignet ist, umfassend oder bestehend aus: 20 bis 25 Gew.-% Nanohörnern aus oxidiertem Kohlenstoff (CNHox), 20 bis 25 Gew.-% Graphenoxid (GO), 25 bis 28,5 Gew.-% Zinn(IV)-oxid (SnO₂) und 25 bis 28,5 Gew.-% Polyvinylpyrrolidon (PVP).

2. Quartäre Nanohybrid-Zusammensetzung nach Anspruch 1, wobei die Gewichtsverhältnisse von CNH_{OX}/GO/SnO₂/PVP in der quaternären Nanohybrid-Zusammensetzung 1/1/1/1 oder 0,75/0,75/1/1 Gew./Gew.-Verhältnis sind.

3. Verfahren zur Herstellung einer quartären Nanohybrid-Zusammensetzung nach Anspruch 1 oder 2, wobei das Verfahren die folgenden Schritte umfasst:
a) Herstellen einer Polyvinylpyrrolidon (PVP)-Lösung durch Auflösen eines PVP-Polymers in Isopropylalkohol unter magnetischem Rühren für etwa 30 Minuten bei Raumtemperatur,
b) Dispergieren der oxidierten Kohlenstoff-Nanohörner in der zuvor hergestellten PVP-Lösung und Fortsetzen des Rührens für etwa 2 Stunden bei Raumtemperatur,
c) Dispergieren einer wässrigen Dispersion von Graphenoxid in Wasser (GO in Wasser w/v - 1 mg/ml) in der in Schritt (b) hergestellten Dispersion und Rühren für etwa 2 Stunden bei Raumtemperatur,
d) Dispergieren eines Nanometerpulvers von Zinn(IV)oxid in der in Schritt (c) hergestellten Dispersion und Fortsetzen des Rührens für etwa 30 Minuten bei Raumtemperatur.

4. Feuchtigkeitsempfindliche Schicht (30) zum Erfassen der Variation des relativen Feuchtigkeitswerts, umfassend oder bestehend aus der quaternären Nanohybrid-Zusammensetzung nach Anspruch 1 oder 2.

5. Widerstandsfeuchtigkeitssensor (1), umfassend: ein dielektrisches Substrat (10), eine erste Elektrode (22) und eine zweite Elektrode (24), die auf dem dielektrischen Substrat (10) abgeschieden sind, und eine feuchtigkeitsempfindliche Schicht (30) aus die quaternäre Nanohybrid-Zusammensetzung nach Anspruch 1 oder 2, die auf mindestens einem Teil der ersten Elektrode (22) und der zweiten Elektrode (24) angeordnet ist.

6. Widerstandsfeuchtigkeitssensor (1) nach Anspruch 5, wobei das dielektrische Substrat (10) aus einem mit einer SiO₂-Schicht bedeckten Si-Substrat hergestellt ist.

7. Widerstandsfeuchtigkeitssensor (1) nach einem der Ansprüche 5 bis 6, wobei das dielektrische Substrat (10) eine Dicke von 450 Mikrometer bis 600 Mikrometer hat.

8. Widerstandsfeuchtigkeitssensor (1) nach einem der Ansprüche 5 bis 7, wobei die erste (22) und die zweite (24) Elektrode aus dem gleichen leitfähigen Material oder aus unterschiedlichen leitfähigen Materialien wie Aluminium oder Kupfer hergestellt sind.

9. Widerstandsfeuchtigkeitssensor (1) nach einem der Ansprüche 5 bis 8, wobei die erste (22) und die zweite (24) Elektrode auf einer Oberfläche des dielektrischen Substrats (10) hinterlegt sind durch mindestens eines von Sputtern, direktem Drucken oder Verdampfen.

10. Widerstandsfeuchtigkeitssensor (1) nach einem der Ansprüche 5 bis 9, wobei die erste (22) und die zweite (24) Elektrode auf der Oberfläche des dielektrischen Substrats (10) in einem linearen Muster oder in einem ineinandergreifenden Muster abgeschieden sind.

11. Verfahren zur Herstellung eines resistiven Feuchtigkeitssensors (1) nach einem der Ansprüche 5 bis 10, umfassend die Schritte:
a) Abscheiden einer ersten Elektrode (22) und einer zweiten Elektrode (24) auf einer Oberfläche eines dielektrischen Substrats (10) in einem linearen Muster oder einem ineinandergreifenden Muster;
b) Abscheiden der quartären Nanohybrid-Zusammensetzung nach einem der Ansprüche 1 bis 2, um eine Schicht auf mindestens einem Teil der Oberfläche der ersten Elektrode (22) und der zweiten Elektrode (24) zu bilden;
c) Wärmebehandlung der Schicht aus Schritt b) bei etwa 70 °C für etwa zwei Stunden unter Vakuum.

12. Verfahren zur Herstellung eines resistiven Feuchtigkeitssensors (1) nach Anspruch 11, wobei Schritt b) durch Elektrospinnen, Tropfengießen oder Aufschleudern durchgeführt wird.

## Revendications

1. Composition nanohybride quaternaire apte à former des couches sensibles a l'humidité (30) pour détecter la variation de la valeur d'humidité relative, comprenant ou consistant en: 20% à 25% en poids de nanocornets de carbone oxydés (CNHox), 20% à 25% en poids d'oxyde de graphène (GO), 25% à 28,5% en poids d'oxyde d'étain (IV) (SnO₂) et 25% à 28,5% en poids de polyvinylpyrrolidone (PVP).

2. Composition nanohybride quaternaire selon la revendication 1, dans laquelle les rapports pondéraux CNH_{OX}/GO/SnO2/PVP dans ladite composition nanohybride quaternaire sont de 1/1/1/1 ou 0,75/0,75/1/1w/w ratio.

3. Procédé de fabrication d'une composition nanohybride quaternaire selon la revendication 1 ou 2, le procédé comprenant les étapes suivantes:
a) préparer une solution de polyvinylpyrrolidone (PVP) en dissolvant un polymère PVP dans de l'alcool isopropylique sous agitation magnétique pendant environ 30 minutes à température ambiante,
b) disperser les nanocornets de carbone oxydés dans la solution de PVP préalablement préparée et continuer l'agitation pendant environ 2 heures à température ambiante,
c) disperser une dispersion aqueuse d'oxyde de graphène dans l'eau (GO dans d'eau p/v - 1 mg/mL) dans la dispersion préparée à l'étape (b) et agiter pendant environ 2 heures à température ambiante,
d) disperser une poudre nanométrique d'oxyde d'étain (IV) dans la dispersion préparée à l'étape (c) et continuer l'agitation pendant environ 30 minutes à température ambiante.

4. Couche sensible à l'humidité (30) pour détecter la variation de la valeur d'humidité relative, comprenant ou consistant en la composition nanohybride quaternaire de la revendication 1 ou 2.

5. Capteur d'humidité résistif (1) comprenant: un substrat diélectrique (10), une première électrode (22) et une seconde électrode (24) déposées sur ledit substrat diélectrique (10), et une couche sensible à l'humidité (30) constituée de la composition nanohybride quaternaire selon la revendication 1 ou 2 disposée sur au moins une partie desdites première électrode (22) et seconde électrode (24).

6. Capteur résistif d'humidité (1) selon la revendication 5, dans lequel ledit substrat diélectrique (10) est fabriqué à partir d'un substrat Si recouvert par une couche SiO₂.

7. Capteur résistif d'humidité (1) selon l'une quelconque des revendications 5 à 6, dans lequel ledit substrat diélectrique (10) a une épaisseur de 450 microns à 600 microns.

8. Capteur résistif d'humidité (1) selon l'une quelconque des revendications 5 à 7, dans lequel lesdites première (22) et deuxième (24) électrodes sont réalisées dans le même matériau conducteur ou dans des matériaux conducteurs différents, tels que l'aluminium ou le cuivre.

9. Capteur résistif d'humidité (1) selon l'une quelconque des revendications 5 à 8, dans lequel lesdites première (22) et seconde (24) électrodes sont déposées sur une surface du substrat diélectrique (10) par au moins l'une des méthodes de pulvérisation, directe impression ou évaporation.

10. Capteur résistif d'humidité (1) selon l'une quelconque des revendications 5 à 9, dans lequel lesdites première (22) et deuxième (24) électrodes sont déposées sur la surface du substrat diélectrique (10) selon un motif linéaire ou selon un motif interdigité.

11. Procédé de fabrication d'un capteur résistif d'humidité (1) selon l'une quelconque des revendications 5 à 10, comprenant les étapes:
a) déposer une première électrode (22) et une seconde électrode (24) sur une surface d'un substrat diélectrique (10) selon un motif linéaire ou un motif interdigité;
b) déposer la composition nanohybride quaternaire selon l'une quelconque des revendications 1 à 2 pour former une couche sur au moins une partie de la surface desdites première électrode (22) et seconde électrode (24);
c) soumettre la couche de l'étape b) à un traitement thermique à environ 70 °C, pendant environ deux heures, sous vide.

12. Procédé de fabrication d'un capteur résistif d'humidité (1) selon la revendication 11, dans lequel l'étape b) est réalisée par électrofilage, drop-casting ou spin-coating.
